# EUROPEAN PATENT APPLICATION

(11) **EP 3 527 975 A1**
(43) Date of publication of application: **21.08.2019**
(21) Application number: 19156983.9
(22) Date of filing: 13.02.2019
(51) Int. Cl.: G01N 27/333

(54) **ION-SELECTIVE ELECTRODE WITH ION-SELECTIVE MEMBRANE COMPRISING A MATERIAL WITH A DIELECTRIC CONSTANT OF 10 OR MORE AND CORRESPONDING TEST PIECE**

(30) Priority: 15.02.2018 JP 2018025249
(71) Applicant: ARKRAY, Inc., Kyoto-shi, Kyoto 601-8045 (JP)
(72) Inventor: EBATA, Takashi, Kyoto-shi, Kyoto 602-0008 (JP)
(74) Representative: Dehns

(57) **Abstract**

This disclosure provides an ion-selective electrode (2 and 3) offering enhanced in simultaneous repeatability. The ion-selective electrode is composed of internal electrodes being coated with an ion-selective membrane comprising a binder resin, an ionophore and a dielectric material having a dielectric constant of 10 or more. A test piece (100) comprising the ion-selective electrode and a liquid receiving section (40S, 40R) is further disclosed. The ion-selective electrode is provided with: a pair of internal electrodes (20A-20F); and an ion-selective membrane (32A-32F) which is provided at respective positions corresponding to the internal electrodes.

## Description

### BACKGROUND

### Technical Field

The present disclosure relates to an ion-selective electrode, a test piece, and an analyzer.

### Related Art

Examples of means known for measuring ion concentration in a sample includes ion-selective electrodes. Ion concentration measurement with ion-selective electrodes is performed by, for example, generating a short-circuit between a reference liquid (liquid having a known ion concentration) and a sample liquid (liquid having an unknown ion concentration), measuring a potential difference therebetween, and then measuring an ion concentration of the sample liquid based on the resulting potential difference.

Ion-selective electrodes are at least provided with sensing sections exhibiting ion sensitivity, and have been variously studied for enhancement in response precision of such sensing sections.

For example, Japanese Patent Application Laid-Open (JP-A) No. H08-134024 discloses an ion-selective electrode provided with an ion-selective membrane including a specified functional substance and a specified plasticizer.

JP-A No. 2008-232660 discloses an ion-selective electrode in which a titanium compound having photocatalyst ability is present in the surface or interior of an ion-responsive glass membrane.

JP-A No. 2017-026637 discloses an ion-selective electrode provided with a sensing section where a membrane containing metal oxide such as titanium oxide is formed on a surface of an electronically conductive support such as stainless steel, the surface being in contact with a sample solution.

### SUMMARY

### Technical Problem

Ion-selective electrodes are required to have simultaneous repeatability. The "simultaneous repeatability" represents the precision in repeated measurement (repeatability precision) in a short time under certain measurement conditions, for example, in the same examination room, by the same examiner, and with the same apparatus.

However, conventional ion-selective electrodes may cause the measurement variation and there is a need to further improve simultaneous repeatability.

An aim of the present disclosure is to provide an ion-selective electrode with enhanced simultaneous repeatability, a test piece using the ion-selective electrode, and an analyzer using the test piece.

### Solution to Problem

The following aspect and optional features are encompassed in solutions for solving the above problems.
<1> An ion-selective electrode comprising: a pair of internal electrodes; and an ion-selective membrane provided at respective positions corresponding to the internal electrodes, the ion-selective membrane comprising a binder resin, an ionophore, and a dielectric material having a dielectric constant of 10 or more, optionally 25 or more, or optionally 50 or more.

The pair of internal electrodes may comprise a sample electrode and a reference electrode.

The ion-selective membrane may comprise a pair of ion-selective membranes each provided at the position of a corresponding internal electrode.
<2> The ion-selective electrode according to <1>, wherein the dielectric material is in a form of a solid.
<3> The ion-selective electrode according to <1> or <2>, wherein the dielectric material comprises at least one selected from the group consisting of a carbon material and a metal oxide.
<4> The ion-selective electrode according to any one of <1> to <3>, wherein the dielectric material is in a form of particles.
<5> The ion-selective electrode according to any one of <1> to <4>, wherein the dielectric material comprises at least one selected from the group consisting of barium titanate, titanium oxide, titanium dioxide, hafnium oxide, and zirconium oxide.
<6> The ion-selective electrode according to any one of <1> to <5>, wherein a content of the dielectric material in the ion-selective membrane is from 2% by mass to 10% by mass with respect to a solid content of the ion-selective membrane.
<7> The ion-selective electrode according to any one of <1> to <6>, wherein a content of the dielectric material in the ion-selective membrane is from 2% by mass to 8% by mass with respect to a solid content of the ion-selective membrane.
<8> The ion-selective electrode according to any one of <1> to <7>, wherein the dielectric material comprises titanium dioxide, and a content of the dielectric material in the ion-selective membrane is from 2% by mass to 8% by mass with respect to a solid content of the ion-selective membrane.
<9> The ion-selective electrode according to any one of <1> to <8>, wherein the dielectric material is substantially uniformly dispersed throughout the ion-selective membrane.
<10> The ion-selective electrode according to <9>, wherein molecules of the binder resin form a three-dimensional network structure, and the dielectric material is physically fixed inside the three-dimensional network structure.
<11> The ion-selective electrode according to any one of <1> to <10>, wherein the ion-selective membrane is a cation-selective membrane.
<12> The ion-selective electrode according to <11>, wherein the cation-selective membrane is a sodium ion-selective membrane or a potassium ion-selective membrane.
<13> The ion-selective electrode according to any one of <1> to <12>, wherein the ion-selective membrane is directly disposed on the internal electrodes.
<14> The ion-selective electrode according to any one of <1> to <13>, wherein a content of the binder resin in the ion-selective membrane is from 18% by mass to 35% by mass with respect to a solid content of the ion-selective membrane, and a content of the ionophore in the ion-selective membrane is from 3% by mass to 10% by mass with respect to a solid content of the ion-selective membrane.
<15> The ion-selective electrode according to any one of <1> to <14>, wherein the ion-selective membrane further comprises: a plasticizer at a content of from 50% by mass to 70% by mass with respect to a solid content of the ion-selective membrane; an ion eliminating agent at a content of from 0.6% by mass to 1.1% by mass with respect to a solid content of the ion-selective membrane; and an electrolyte at a content of from 0.23% by mass to 0.37% by mass with respect to a solid content of the ion-selective membrane.
<16> A test piece comprising: the ion-selective electrode according to any one of <1> to <15>; and a liquid receiving section.

### Effect of Invention

According to the present disclosure, an ion-selective electrode having enhanced simultaneous repeatability, a test piece using the ion-selective electrode, and an analyzer using the test piece are provided.

### BRIEF DESCRIPTION OF THE DRAWINGS

Certain embodiments will now be described in greater detail by way of example only and with reference to the accompanying drawings in which:
FIG. 1A is an exploded view illustrating a test piece according to an embodiment of the present disclosure;
FIG. 1B is a schematic view illustrating a section of the test piece illustrated in FIG. 1A, the section corresponding to an ion-selective electrode according to an embodiment of the present disclosure;
FIG. 2A is a perspective view illustrating a test piece according to an embodiment of the present disclosure;
FIG. 2B is a perspective view illustrating a test piece according to an embodiment of the present disclosure;
FIG. 3 is a perspective view illustrating an analyzer;
FIG. 4 is a graph representing the result obtained by analyzing the sample liquid with the test piece obtained in Example 1;
FIG. 5 is a graph representing the result obtained by analyzing the sample liquid with the test piece obtained in Example 2;
FIG. 6 is a graph representing the result obtained by analyzing the sample liquid with the test piece obtained in Example 3; and
FIG. 7 is a graph representing the results obtained by analyzing the sample liquid with the test piece obtained in each Comparative Example.

### DETAILED DESCRIPTION

Hereinafter, an embodiment of an ion-selective electrode will be described.

The numerical value range herein represented by "(from) ... to ..." means that the range encompasses the respective numerical values described before and after "to" as the lower limit and the upper limit, respectively.

The term "step" herein encompasses not only an independent step, but also a step that can achieve a predetermined object even when it cannot be clearly distinguished from other steps.

### <Ion-selective Electrode>

An ion-selective electrode according to one aspect of the present disclosure includes a pair of internal electrodes and an ion-selective membrane provided at respective positions corresponding to the internal electrodes. The ion-selective membrane is formed so as to include a binder resin, an ionophore, and a dielectric material having a dielectric constant of 10 or more (hereinafter, sometimes simply referred to as a "dielectric material".).

Various ion-selective electrodes are known as disclosed in, for example, the patent literature as set forth above.

The ion-selective membrane equipped with the ion-selective electrode disclosed in JP-A No. H08-134024 is formed by using a liquid film-forming resin composition including a plasticizer having a high dielectric constant, for the purpose of adjusting dielectric constant. However, because the liquid film-forming resin composition which forms the ion-selective membrane uses as the plasticizer one that has a high dielectric constant, the material employable as the plasticizer is limited. Further, a plasticizer having a high dielectric constant may deteriorate ion selection performance, thereby causing the variation in measurement value in some cases. Therefore, the ion-selective electrode disclosed in JP-A No. H08-134024 is not necessarily one that has high simultaneous repeatability (repeatability precision).

The ion-selective electrode disclosed in JP-A No. 2008-232660 uses titanium compound for the purposes of removing impurities (for example, protein) attached to the responsive glass and of not generating an asymmetry potential. As the titanium compound is used for the purpose of removing substances attached around a passage or the like, the ion-selective electrode disclosed in JP-A No. 2008-232660 does not contribute to an enhancement in simultaneous repeatability of the ion-selective membrane itself.

The ion-selective electrode disclosed in JP-A No. 2017-026637 is provided with a sensing section in which a layer of a metal oxide such as titanium oxide is disposed on a support such as stainless steel for the purpose of decreasing the electric resistance of the sensing section. However, the sensing section is not formed with incorporating the metal oxide in a liquid film-forming resin composition, and a step of newly forming a metal oxide layer as the sensing section is required. Therefore, the ion-selective electrode disclosed in JP-A No. 2017-026637 may cause measurement variation, and fails to satisfy sufficient simultaneous repeatability. Moreover, the ion-selective electrode disclosed in JP-A No. 2017-026637 is increased in the cost for formation of the sensing section.

Thus, such conventional ion-selective electrodes are not sufficient in simultaneous repeatability, and there is a need to improve measurement precision.

Examples of a solution for enhancing simultaneous repeatability of an ion-selective electrode include increasing electric conductivity of an ion-selective membrane with which an ion-selective electrode is provided. Having considered that such an increase in electric conductivity of an ion-selective membrane can be achieved by using a material with high electric conductivity, the present inventor focused on incorporation of a material having a high dielectric constant. As a result, it was found that simultaneous repeatability of an ion-selective electrode is enhanced by forming an ion-selective membrane containing, in addition to a binder resin and an ionophore, a dielectric material exhibiting a dielectric constant of 10 or more.

Hereinafter, an ion-selective membrane with which an ion-selective electrode according to one embodiment of the present disclosure is provided will be described. The ion-selective membrane includes a binder resin, an ionophore, and a dielectric material. The ion-selective membrane may include, if necessary, additive(s) such as a plasticizer, an electrolyte, and/or an ion eliminating agent.

Hereinafter, the materials for forming the ion-selective membrane will be described.

### Binder Resin

The binder resin is not particularly limited. Specific examples of the binder resin include polyvinyl chloride, polyvinylidene chloride, polyacrylonitrile, polyurethane, polyvinyl acetate, a silicone elastomer, polyvinyl alcohol, cellulose ester, polycarbonate, a vinyl chloride/vinyl acetate copolymer, a vinyl chloride/vinyl acetate/vinyl alcohol copolymer, and a vinyl chloride/vinylidene chloride copolymer. In particular, the binder resin is preferably a resin including a structural unit derived from vinyl chloride (at least one selected from the group consisting of a homopolymer of a structural unit derived from vinyl chloride and a copolymer including a structural unit derived from vinyl chloride) from the viewpoint of an enhancement in simultaneous repeatability. More preferable examples of the resin including a structural unit derived from vinyl chloride includes polyvinyl chloride, a copolymer of vinyl chloride/vinyl acetate, and a terpolymer of vinyl chloride/vinyl acetate/vinyl alcohol. The binder resin may be used singly, or in combination of two or more kinds thereof.

A content of the binder resin in the ion-selective membrane is preferably from 18% by mass to 35% by mass with respect to a solid content of the ion-selective membrane. The lower limit of the content of the binder resin is more preferably 20% by mass or more. The upper limit of the content of the binder resin is more preferably 30% by mass or less.

### Ionophore

An ionophore is a chemical substance having the ability to increase the permeability of an ion to be measured. The ionophore binds to the ion to be measured and passes through the ion-selective membrane, thereby having the ion to pass (namely, carrier ionophore). The ionophore is not particularly limited. The ionophore may be selected depending on the kind of the ion to be measured.

In a case in which the ion-selective membrane is a potassium selective membrane, examples of the ionophore include valinomycin, cyclic polyether, tetralactone, macrolide actin, enniatin, potassium tetraphenylborate, and derivatives thereof. In particular, the ionophore for use in a potassium selective membrane is preferably cyclic polyether, more preferably a compound having a bis(crown ether) structure, and still more preferably bis[(benzo-15-crown-5)-4-methyl]pimelate ((bis(benzo-15-crown-5)).

In a case in which the ion-selective membrane is a sodium ion-selective membrane, examples of the ionophore include monensin sodium, methyl monensin, cyclic polyether, tetralactone, macrolide actin, enniatin, sodium tetraphenylborate, a calixarene compound, and derivatives thereof. In particular, the ionophore for use in a sodium ion-selective membrane is preferably cyclic polyether, more preferably a compound having a bis(crown ether) structure, and still more preferably bis[(12-crown-4)methyl]-2-dodecyl-2-methylmalonate (bis(12-crown-4)).

A content of the ionophore in the ion-selective membrane is preferably from 3% by mass to 10% by mass with respect to a solid content of the ion-selective membrane. The lower limit of the content of the ionophore is more preferably 4% by mass or more. The upper limit of the content of the ionophore is more preferably 8% by mass or less.

### Dielectric Material

A dielectric material herein means one that exhibits a dielectric constant of 10 or more. A form of the dielectric material is not particularly limited as long as the dielectric constant is 10 or more. The dielectric material may be in a form of a liquid or a solid. From the viewpoint of an enhancement in simultaneous repeatability, the dielectric material is preferably in any form so as to be hardly dissolved in a liquid film-forming resin composition for providing the ion-selective membrane. The dielectric material is more preferably in a form of a solid that is hardly dissolved in the liquid film-forming resin composition, from such a viewpoint. Herein, such a dielectric material in the form of a solid is any dielectric material that is hardly dissolved in the liquid film-forming resin composition and maintains its solid form even when mixed with the liquid film-forming resin composition, and that maintains its solid form even when contained in the ion-selective membrane. The dielectric material in the form of a solid is hardly dissolved even when brought into contact with a sample liquid and a reference liquid. That is, the dielectric material in the form of a solid is a dielectric material that is hardly dissolved in a liquid. The dielectric material is still more preferably in a form of particles. In a case in which the dielectric material is in the form of particles, the dielectric material can be easily dispersed in the ion-selective membrane, thereby further enhancing simultaneous repeatability. The shape of the particles is not particularly limited, and examples thereof include spherical, granulate, flake, whisker, and rod shapes. Herein, the dielectric material having a dielectric constant of 10 or more is distinguished from a plasticizer, and does not have any effect as a plasticizer.

The dielectric constant of the dielectric material may be 15 or more, preferably 25 or more, more preferably 50 or more. The upper limit of the dielectric material is not particularly limited, and examples thereof include 30,000 or less.

The method of measuring the dielectric constant is a method according to the method of measuring the relative permittivity tangent prescribed in JIS C 2138:2007 ("Electrical insulating materials - Methods for the determination of the relative permittivity and dielectric dissipation factor"), which substantially corresponds to IEC 60250:1969.

A kind of the dielectric material is not particularly limited. The dielectric material may be an inorganic material that is hardly dissolved in the liquid film-forming resin composition and that is hardly dissolved even when brought into contact with a sample liquid and a reference liquid, from the viewpoint of an enhancement in simultaneous repeatability. The inorganic material may be preferably at least one of a carbon material or a metal oxide.

Herein, the phrase that a component is "hardly dissolved" in the liquid film-forming resin composition means that a solubility of the component in the liquid film-forming resin composition at 20°C is less than 5% by mass, namely, an amount of the component which can be dissolved in the liquid film-forming resin composition at 20°C is less than 5% by mass with respect to a total mass of the liquid film-forming resin composition.

Examples of the carbon material include graphite (natural graphite, artificial graphite), carbon black, diamond, carbon nanotube, carbon nanofiber, carbon fiber, and fullerene. Such carbon materials may be used singly, or in combination of two or more kinds thereof.

The metal oxide may be, for example, an oxide or composite oxide of a transition metal. Specific examples of the metal oxide include barium titanate, calcium titanate, strontium titanate, titanium oxide, titanium dioxide, hafnium oxide, and zirconium oxide. The metal oxide may be preferably at least one selected from the group consisting of barium titanate (BaTiO₃), titanium oxide (TiO), titanium dioxide (TiO₂), hafnium oxide (HfO₂), and zirconium oxide (ZrO₂).

In particular, the dielectric material having a dielectric constant of 10 or more is preferably at least one selected from the group consisting of barium titanate, titanium oxide, titanium dioxide, hafnium oxide, and zirconium oxide, and more preferably titanium dioxide, from the viewpoint of an enhancement in simultaneous repeatability.

A content of the dielectric material in the ion-selective membrane may be 1% by mass or more with respect to a solid content of the ion-selective membrane, from the viewpoint of an enhancement in simultaneous repeatability. The upper limit is not particularly limited, and examples thereof include 15% by mass or less. The content of the dielectric material may be from 2% by mass to 10% by mass with respect to a solid content of the ion-selective membrane, from the viewpoint of a greater enhancement in simultaneous repeatability. The content may be from 2% by mass to 8% by mass from the same viewpoint. The lower limit of the content of the dielectric material is preferably 3% by mass or more. The upper limit of the content of the dielectric material is preferably 6% by mass or less, more preferably 5% by mass or less.

A combination of the dielectric material contained in the ion-selective membrane with the content of the dielectric material is preferably a combination of a dielectric material containing titanium dioxide with a content of the dielectric material of from 2% by mass to 8% by mass with respect to a solid content of the ion-selective membrane, more preferably a combination of a dielectric material containing titanium dioxide with a content of the titanium dioxide of from 2% by mass to 5% by mass with respect to a solid content of the ion-selective membrane.

In addition to the binder resin, the ionophore, and the dielectric material having a dielectric constant of 10 or more, the ion-selective membrane may be formed by further using, if necessary, additive(s) such as a plasticizer, an ion eliminating agent, and/or an electrolyte.

### Plasticizer

Flexibility of the ion-selective membrane may be enhanced by incorporating a plasticizer. Therefore, the plasticizer has, for example, the effect of suppressing the occurrence of cracking of the ion-selective membrane. The plasticizer preferably has a high dielectric constant from the viewpoint of an enhancement in simultaneous repeatability, and the dielectric constant of the plasticizer may be, for example, in a range from 10 to 24. The dielectric constant of the plasticizer corresponds to the numerical value obtained by the measurement method described above. Herein, the plasticizer is distinguished from the above dielectric material.

The plasticizer is not particularly limited. Specific examples of the plasticizer include 2-nitrophenyl octyl ether (NPOE), 2-nitrophenyl dodecyl ether (NPDE), 2-nitrophenyl phenyl ether (NPPE), dioctyl adipate (DOA), bis(1-butylpentyl) adipate (BBPA), dibutyl sebacate (DBS), dibutyl phthalate (DBP), dioctyl phthalate (DOP), dioctyl phenyl phosphoric acid (DOPP), dioctyl sebacate (DOS), and dibenzyl ether (DBE). In particular, a nitrophenyl alkyl ether compound is preferable, and 2-nitrophenyl octyl ether (NPOE) is more preferable.

A content of the plasticizer in the ion-selective membrane is preferably from 50% by mass to 70% by mass with respect to a solid content of the ion-selective membrane. The lower limit of the content of the plasticizer is more preferably 52% by mass or more. The upper limit of the content of the plasticizer is more preferably 67% by mass or less.

### Ion Eliminating Agent

An ion eliminating agent may be selected depending on the kind of an ion to be measured. In a case in which the ion-selective membrane is a cation-selective membrane, the ion eliminating agent to be used is preferably an anion eliminating agent. The influence of an anion on measurement due to interference may be suppressed by using the anion eliminating agent.

The anion eliminating agent is not particularly limited. Specific examples of the anion eliminating agent include tetraphenylborate salts such as sodium tetrakis[3,5-bis(trifluoromethyl)phenyl]borate (Na-TFPB), potassium tetrakis[3,5-bis(trifluoromethyl)phenyl]borate (K-TFPB), potassium tetrakis(4-chlorophenyl)borate (K-TCPB), sodium tetrakis(4-chlorophenyl)borate (Na-TCPB), potassium tetraphenylborate (K-TPB), sodium tetraphenylborate (Na-TPB), and sodium tetrakis[3,5-bis(1,1,1,3,3,3-hexafluoro-2-methoxy-2-propyl)phenyl]borate. In particular, from the viewpoint of an enhancement in simultaneous repeatability, potassium tetrakis[3,5-bis(trifluoromethyl)phenyl]borate (K-TFPB) is preferable in a case in which the ion-selective membrane is a potassium selective membrane, and sodium tetrakis[3,5-bis(trifluoromethyl)phenyl]borate (Na-TFPB) is preferable in a case in which the ion-selective membrane is a sodium ion-selective membrane.

In a case in which the ion-selective membrane is a cation-selective membrane, a quaternary ammonium salt may be used in combination with the anion eliminating agent from the viewpoint of an enhancement in simultaneous repeatability. Specific examples of the quaternary ammonium salt include trioctylmethylammonium chloride (TOMAC), tridecylmethylammonium chloride (TDMAC), and tetraoctylammonium chloride. In particular, trioctylmethylammonium chloride (TOMAC) is preferable. The anion eliminating agent to be used is preferably at least one of the tetraphenylborate salt or the quaternary ammonium salt.

A content of the ion eliminating agent in the ion-selective membrane is preferably from 0.6% by mass to 1.1% by mass with respect to a solid content of the ion-selective membrane. The lower limit of the content of the ion eliminating agent is more preferably 0.7% by mass or more. The upper limit of the content of the ion eliminating agent is more preferably 1.0% by mass or less. The content of the ion eliminating agent may be within the above range even when any one of the tetraphenylborate salt or the quaternary ammonium salt is used, and even when both thereof are used in combination.

### Electrolyte

An electrolyte has the effect of aiding electric conducting of the ion-selective membrane. The electrolyte is not particularly limited, and examples thereof include a metal halide. The metal halide may be a metal chloride. Specific examples of the electrolyte include sodium chloride, potassium chloride, silver chloride, silver bromide, and silver iodide.

A content of the electrolyte in the ion-selective membrane is preferably from 0.23% by mass to 0.37% by mass with respect to a solid content of the ion-selective membrane. The lower limit of the content of the electrolyte is more preferably 0.25% by mass or more. The upper limit of the content of the electrolyte is more preferably 0.34% by mass or less.

A thickness of the ion-selective membrane is not particularly limited. The thickness of the ion-selective membrane is, for example, in a range from 50 µm to 300 µm.

An application of the ion-selective membrane is not particularly limited, and examples thereof include an anion-selective membrane for measuring an anion such as a chloride ion; and a cation-selective membrane for measuring a cation such as a sodium ion or a potassium ion. In particular, the ion-selective membrane is preferably a cation-selective membrane, and more preferably a sodium ion-selective membrane or a potassium ion-selective membrane.

Examples of a preferable method of producing the ion-selective membrane include a method including the following process. 1) A first process of preparing a liquid film-forming resin composition including a binder resin, an ionophore, and a dielectric material having a dielectric constant of 10 or more. 2) A second process of performing coating with the liquid film-forming resin composition to form a coating film. 3) A third process of drying the coating film to form an ion-selective membrane.

### First Process

The first process is a process of preparing a liquid film-forming resin composition for ion-selective membrane formation. The liquid film-forming resin composition may be prepared by mixing the binder resin, the ionophore, and the dielectric material having a dielectric constant of 10 or more, and, if necessary, the plasticizer and the electrolyte. The liquid film-forming resin composition is produced by dissolving or dispersing such materials in a solvent. The dissolution or dispersion method is not particularly limited, and a known method using a high-speed blender, a homogenizer, or the like may be adopted.

Specifically, the liquid film-forming resin composition may be prepared as follows, for example. First, a binder resin and an ionophore, and, if necessary, a plasticizer and an electrolyte are mixed in a solvent, and dissolved therein to prepare a dissolution liquid. Next, a dielectric material having a dielectric constant of 10 or more is added to the dissolution liquid, thereby preparing a liquid film-forming resin composition in which the dielectric material is dispersed. The solvent for use in preparation of the liquid film-forming resin composition is not particularly limited, and examples thereof include organic solvents such as tetrahydrofuran (THF), N-methyl-2-pyrrolidone (NMP), and methyl ethyl ketone (MEK). Such a preparation method by mixing enables forming a liquid film-forming resin composition which has as its matrix the binder resin, molecules of which form a three-dimensional network structure. Respective materials are substantially uniformly dispersed in the liquid film-forming resin composition. As described above, at least the dielectric material is hardly dissolved in the liquid film-forming resin composition and is maintained in the form of a solid, and is maintained in the form of a solid even when contained in the ion-selective membrane, while binding between materials and interaction therebetween are varied depending on materials used. The dielectric material may be present in the organic solvent in a substantially uniformly dispersed state. In embodiments, the dielectric material may be physically fixed to a surface of the binder resin and/or inside of the three-dimensional network structure. Similarly to the dielectric material, the ionophore may be present in an organic solvent in a substantially uniformly dispersed state, and may be fixed on a surface of the binder resin and/or inside of the three-dimensional network structure by physical fixation or weak electric force such as a hydrogen bond. In embodiments, the ionophore may be chemically bound to the binder resin via substitution of the binder resin or crosslinking to the binder resin.

### Second Process

The second process is a process of performing coating with the liquid film-forming resin composition prepared, to form a coating film. For example, a predetermined region may be coated with the liquid film-forming resin composition prepared. The coating method is not particularly limited. Examples of the coating method include known methods such as a casting method, spray coating, a dipping method, and a spin-off coating method.

### Third Process

The third process is a process of drying the coating film to form an ion-selective membrane. The drying condition is not particularly limited as long as the coating film can be dried, and examples thereof include conditions of a temperature of from 40°C to 80°C and a time of from 1 minute to 60 minutes. Since the dielectric material and the ionophore are substantially uniformly dispersed in a solvent of the liquid film-forming resin composition as described above, the drying may result in an ion-selective membrane which has the binder resin as a matrix thereof and in which the dielectric material is physically fixed on a surface of the binder resin and/or inside of the three-dimensional network structure, that is, an ion-selective membrane throughout which the dielectric material is in a substantially uniformly dispersed state. The ion-selective membrane thus obtained may further contain the ionophore as a component that is present on a surface of the binder resin and/or inside of the three-dimensional network structure by physical fixation or weak electric force such as a hydrogen bond, namely, as a component that is in a substantially uniformly dispersed state throughout the ion-selective membrane.

Any method other than such a preparation method can also be used to form an ion-selective membrane by coating with respective materials in a layered structure and drying of the resulting coating film.

As described above, an ion-selective electrode according to one aspect of the present invention is provided with an ion-selective membrane. An ion-selective electrode according to one aspect of the present invention is provided with the ion-selective membrane and a pair of internal electrodes. The ion-selective electrode may be provided with the ion-selective membrane, a sample internal electrode (sample electrode) and a reference internal electrode (reference electrode). The ion-selective electrode may be provided with the ion-selective membrane, internal electrodes (a sample electrode and a reference electrode), and an internal solution. In a case in which an ion-selective electrode is provided with an internal electrode, the ion-selective membrane may be disposed at any part corresponding to the internal electrode as long as it can be electrically connected to the internal electrode under a condition that a sample liquid and a reference liquid are contained in the ion-selective electrode. For example, the ion-selective membrane may be disposed over the internal electrode. In a case in which the ion-selective membrane is disposed over an internal electrode, the ion-selective membrane may be directly disposed on the internal electrode or may be disposed above the internal electrode with any member interposed therebetween such as a supporting device like a rod, an electro-conductive sheet or a soluble protective film. In a case in which the ion-selective membrane is directly disposed on the internal electrode, the ion-selective membrane can be prepared by, for example, applying a liquid film-forming resin composition for forming the ion-selective membrane onto the internal electrode and drying the applied composition. Alternatively, the ion-selective membrane may be disposed over a surface of a member in contact with a sample liquid, the surface being in contact with the sample liquid. The ion-selective electrode may include one of the ion-selective membranes, or may be provided with two or more of the ion-selective membranes. In a case in which an ion-selective electrode includes two or more of the ion-selective membranes, the ion-selective electrode may include, for example, a sodium ion-selective membrane and a potassium ion-selective membrane. In a case in which an ion-selective electrode is provided with an internal solution, the ion-selective solution may be provided at any part corresponding to the ion-selective membrane and the internal electrode as long as electrically connection of the ion-selective membrane to the internal electrode can be made via the internal solution. For example, the ion-selective membrane and the internal electrode may be placed in a liquid container filled with the internal solution. In this case, as the ion-selective membrane may be provided at any part over the internal electrode, the ion-selective membrane may be directly disposed on the internal electrode or may be disposed above the internal electrode with any member interposed therebetween such as a supporting device like a rod or an electro-conductive sheet.

Examples of the internal electrode include a metal/metal salt electrode. Examples of the metal/metal salt electrode include a silver/silver halide electrode. Examples of the silver/silver halide electrode include a silver/silver chloride electrode.

The internal solution is not limited thereto, and examples thereof include an aqueous metal salt solution, and a mixed solution of an aqueous metal salt solution. Specific examples of the aqueous metal salt solution include an aqueous potassium chloride solution, and a mixture of an aqueous potassium chloride solution and an aqueous metal salt solution. In particular, the internal solution is preferably an aqueous potassium chloride solution.

Examples of a preferable method of producing an ion-selective electrode include a production method including processes similar to those of the method of producing the ion-selective membrane. Specifically, the ion-selective electrode is obtained by the following method. First, a liquid film-forming resin composition is prepared in the same manner as in the first process of the method of producing the ion-selective membrane. Next, the liquid film-forming resin composition prepared in the first process is directly coated on an internal electrode or is coated on a member disposed on an internal electrode, as in the second process of the method of producing the ion-selective membrane. Then, the coating film of the liquid film-forming resin composition is dried to form an ion-selective membrane, thereby providing an ion-selective electrode, in the same manner as in the third process of the method of producing the ion-selective membrane. The processes provide an ion-selective electrode including an ion-selective membrane.

Examples of the method further include the following production method. First, an ion-selective membrane is produced by the above-described method of producing the ion-selective membrane. Next, the resulting ion-selective membrane is separated from a predetermined region, and attached onto a surface of a member in contact with a sample liquid, the surface being in contact with the sample liquid, according to a known method, thereby producing an ion-selective electrode.

An ion-selective electrode can be applied to, for example, a pH electrode. An ion-selective electrode according to one aspect of the present disclosure can be applied to an electrode such as an ion-selective electrode for measurement of a concentration of an anion such as a chloride ion; or an ion-selective electrode for measurement of a concentration of a cation such as a sodium ion or a potassium ion. In particular, the ion-selective electrode is suitably applied to an ion-selective electrode for measurement of the concentration of a cation such as a sodium ion or a potassium ion.

An example of where an ion-selective electrode is applied include a test piece for ion concentration measurement. Examples of a measurement sample for ion concentration measurement include biological samples such as blood, urine, saliva, a spinal fluid, and sweat.

### <Test Specimen>

Next, a test piece will be described. A test piece is provided with the ion-selective electrode according to one aspect of the present invention. Hereinafter, a test piece according to one preferable embodiment of the present invention, which is a test piece provided with the ion-selective electrode including an ion-selective membrane including a binder resin, an ionophore, and a dielectric material having a dielectric constant of 10 or more, and an internal electrode (sample electrode and reference electrode), will be described with reference to drawings. It is remarked that the test piece is not intended to be limited to those described with reference to the drawings.

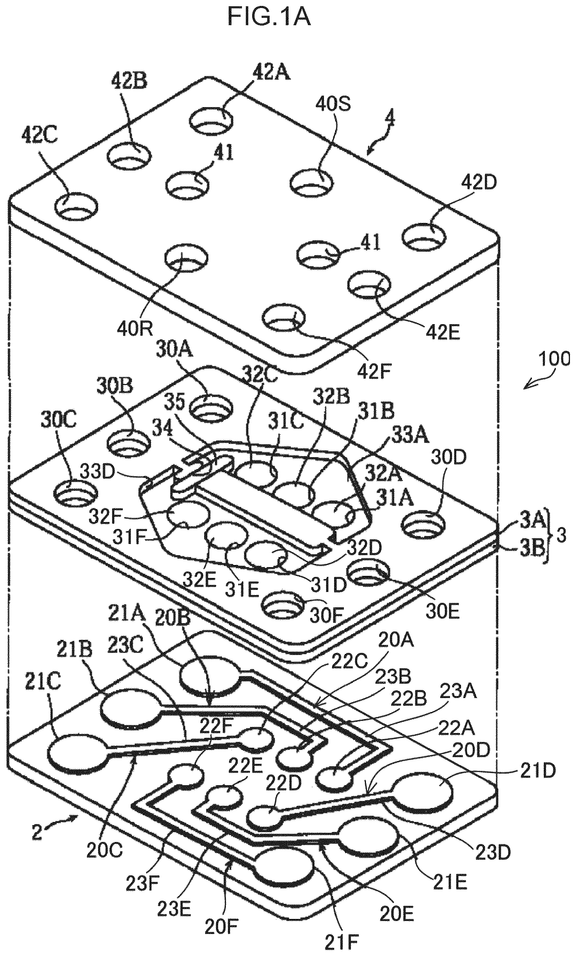

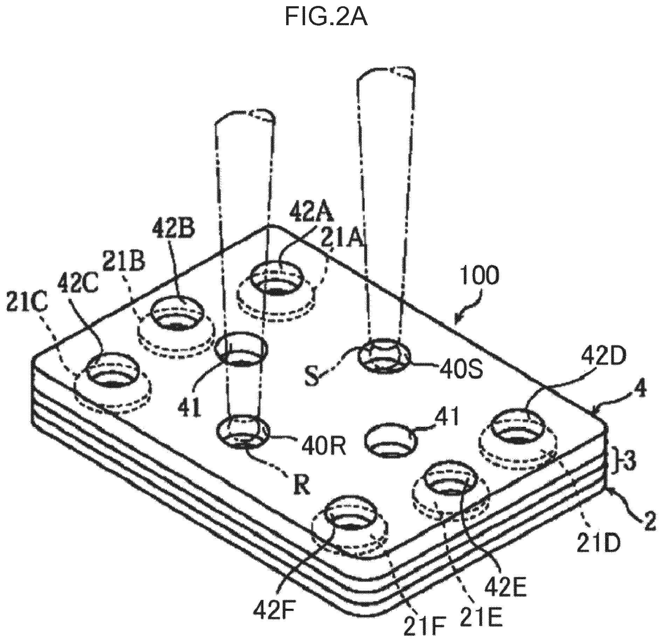

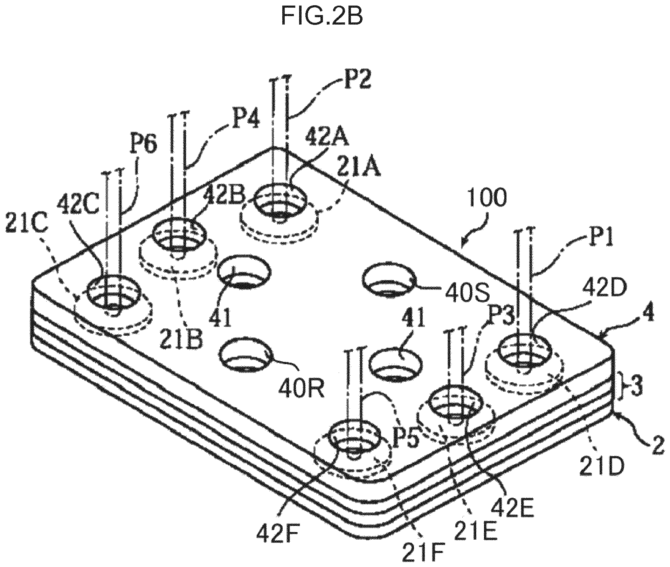

FIG. 1A is an exploded view illustrating a test piece. FIG. 2A is a perspective view illustrating a test piece, and is a view for describing a state where a reference liquid and a sample liquid are injected. FIG. 2B is a perspective view illustrating a test piece and is a view for describing a state of connection to a probe with which an analyzer is provided.

The test piece 100 illustrated in FIGs. 1A, 2A and 2B is used for ion concentration measurement of ion species (for example, sodium ion, potassium ion, and chloride ion) in a sample liquid (for example, a biological sample such as blood, urine, saliva, or a spinal fluid, or an adjusted liquid of such a biological sample). The test piece 100 is configured such that the ion concentration in the sample liquid can be quantitatively determined by the potential difference generated between the sample liquid and a reference liquid having a known ion concentration.

The test piece 100 illustrated in FIGs. 1A, 2A and 2B is formed in a three-layered structure. The test piece 100 includes a substrate 2, a mid-layer 3 (resist) formed on the substrate 2, and a cover 4 formed on the mid-layer 3. The test piece 100 has a structure which enables a measurement of respective potential differences with respect to three kinds of ions.

As illustrated in FIG. 1A, the substrate 2 is formed by a resin material (for example, polyester) in an elongated rectangular manner. Six internal electrodes are formed on the substrate 2. The six internal electrodes are formed from three sample liquid electrodes 20A to 20C and three reference liquid electrodes 20D to 20F. The sample liquid electrodes 20A to 20C and the reference liquid electrodes 20D to 20F can be formed collectively by, for example, a printing procedure using a silver paste, a silver/silver chloride paste, or the like, or a deposition sputtering procedure.

The sample liquid electrodes 20A to 20C include terminal sections 21A to 21C and liquid receiving sections 22A to 22C, respectively. The reference liquid electrodes 20D to 20F include terminal sections 21D to 21F and liquid receiving sections 22D to 22F, respectively.

The sample liquid electrodes 20A to 20C include conductor wiring sections 23A to 23C for connection between the terminal sections 21A to 21C and the liquid receiving sections 22A to 22C, respectively. The reference liquid electrodes 20D to 20F include conductor wiring sections 23D to 23F for connection between the terminal sections 21D to 21F and the liquid receiving sections 22D to 22F, respectively.

The terminal sections 21A to 21C and the terminal sections 21D to 21F are each arranged at a terminal of the substrate 2. The liquid receiving sections 22A to 22C and the liquid receiving sections 22D to 22F are each arranged at the center of the substrate 2. The terminal sections 21A to 21C are connected to the liquid receiving sections 22A to 22C via the conductor wiring sections 23A to 23C, respectively. The terminal sections 21D to 21F are connected to the liquid receiving sections 22D to 22F via the conductor wiring sections 23D to 23F, respectively. Therefore, the respective potential differences generated between the liquid receiving section 22A and the liquid receiving section 22D, between the liquid receiving section 22B and the liquid receiving section 22E, and between the liquid receiving section 22C and the liquid receiving section 22F are measured by the terminal sections 21A to 21C and the terminal sections 21D to 21F.

The mid-layer 3 illustrated in FIGs. 1A, 2A and 2B is formed from two layers of an upper mid-layer 3A (upper layer resist) and a lower mid-layer 3B (lower layer resist).

As illustrated in FIG. 1A, the mid-layer 3 has through holes 30A to 30C formed on respective regions corresponding to the terminal sections 21A to 21C, and has through holes 30D to 30F formed on respective regions corresponding to the terminal sections 21D to 21F. The lower mid-layer 3B of the mid-layer 3 has communication holes 31A to 31C formed on respective regions corresponding to the liquid receiving sections 22A to 22C, and communication holes 31D to 31F formed on respective regions corresponding to the liquid receiving sections 22D to 22F. The communication holes 31A to 31C and the communication holes 31D to 31F retain ion-selective membranes 32A to 32C and ion-selective membranes 32D to 32F each for selective permeation of specified ion species, respectively. It is noted that a section including the ion-selective membranes 32A to 32C and the ion-selective membranes 32D to 32F corresponds to an ion-selective electrode according to one embodiment of the present disclosure.

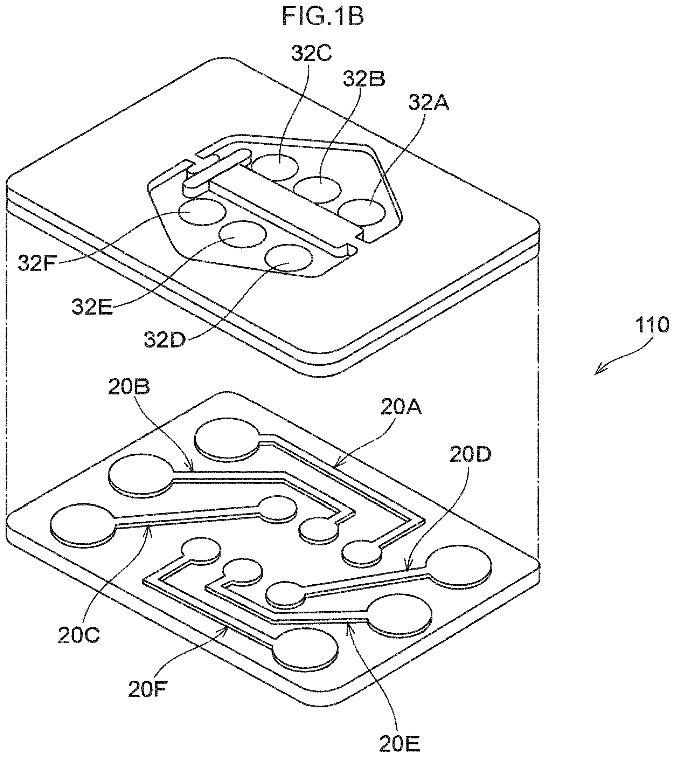

A main section of the test piece 100 illustrated in FIG. 1A, corresponding to an ion-selective electrode, is illustrated in FIG. 1B. FIG. 1B is a schematic view illustrating a section of the test piece 100 illustrated in FIG. 1A, corresponding to an ion-selective electrode according to one embodiment of the present disclosure. An ion-selective electrode 110 includes ion-selective membranes 32A to 32C and ion-selective membranes 32D to 32F. The ion-selective electrode 110 further includes sample liquid electrodes 20A to 20C and reference liquid electrodes 20D to 20F.

The test piece 100 illustrated in FIGs. 1A, 2A and 2B is formed so that the ion-selective membrane 32A and the ion-selective membrane 32D cause selective permeation of a potassium ion, as illustrated in FIG. 1A. Further, the test piece 100 is formed so that the ion-selective membrane 32B and the ion-selective membrane 32E allow for selective permeation of a chloride ion. The test pieces 100 are each formed so that the ion-selective membrane 32C and the ion-selective membrane 32F allow for selective permeation of a sodium ion.

The ion-selective membranes 32A to 32C and the ion-selective membranes 32D to 32F are formed as follows. The communication holes 31A to 31C and the communication holes 31D to 31F are coated with the liquid film-forming resin composition for ion-selective membrane formation, thereby forming respective coating films. Thereafter, the respective coating films are dried, thereby forming the ion-selective membranes 32A to 32C and the ion-selective membranes 32D to 32F. That is, as the communication holes 31Ato 31F are provided corresponding to the liquid receiving sections 22A to 22F, the ion-selective membranes 32A to 32F are formed on the liquid receiving sections 22A to 22F, respectively. The ion-selective membrane 32A and the ion-selective membrane 32D, and the ion-selective membrane 32C and the ion-selective membrane 32F, which are cation-selective membranes, are each preferably formed by the liquid film-forming resin composition for ion-selective membrane formation, for the purpose of an enhancement in simultaneous repeatability.

As illustrated in FIG. 1A, a liquid retention hole 33A and a liquid retention hole 33D are formed at the center of the upper mid-layer 3A. The liquid retention hole 33A is for retaining a sample liquid, and the liquid retention hole 33D is for retaining a reference liquid. The liquid retention hole 33A and the liquid retention hole 33D are mutually connected via a notch 34. The notch 34 is provided with a bridge 35 arranged for allowing for travelling of any ion. The bridge 35 not only allows a sample liquid to be retained in the liquid retention hole 33A, but also allows a short-circuit to be generated between the sample liquid and a reference liquid when the reference liquid is retained in the liquid retention hole 33D.

The upper mid-layer 3A and the lower mid-layer 3B are each formed by, for example, printing on the substrate 2 a curable resin such as an ultraviolet curing resin by use of a mask, and then cuing the curable resin by UV irradiation. The upper mid-layer 3A and the lower mid-layer 3B are formed by using different masks. The upper mid-layer 3A and the lower mid-layer 3B may be obtained by repeating such formation multiple times so that an objective thickness is obtained.

A liquid receiving port 40S for feeding a sample liquid S, a liquid receiving port 40R for feeding a reference liquid R, and an air vent hole 41 are formed on each cover 4 of the test piece 100 illustrated in FIGs. 1A, 2A and 2B. As illustrated in FIG. 2A, the liquid receiving port 40S is provided for feeding the sample liquid S to the liquid retention hole 33A, and the liquid receiving port 40R is provided for feeding the reference liquid R to the liquid retention hole 33D. In this regard, the air vent holes 41 are provided for discharging air in a space formed by the liquid retention holes 33A and 33D and also the cover 4. Through holes 42A to 42C are formed on respective regions corresponding to the terminal sections 21A to 21C, and through holes 42D to 42F are formed on respective regions corresponding to the terminal sections 21D to 21F, on the cover 4.

That is, the terminal sections 21A to 21C are exposed outwards via the through holes 30A to 30C and the through holes 42A to 42C formed on the mid-layer 3 and the cover 4, respectively. Similarly, the terminal sections 21D to 21F are exposed outwards via the through holes 30D to 30F and the through holes 42D to 42F formed on the mid-layer 3 and the cover 4, respectively. Accordingly, the terminal sections 21A to 21C can be brought into contact with a probe P2, a probe P4, and a probe P6 represented by a dashed line for potential difference measurement, through the through holes 30A to 30C and the through holes 42A to 42C, respectively, as illustrated in FIG. 2B. Similarly, the terminal sections 21D to 21F can be brought into contact with a probe P1, a probe P3, and a probe P5 represented by a dashed line for potential difference measurement, through the through holes 30D to 30F and the through holes 42D to 42F, respectively.

The sample liquid S and the reference liquid R are fed as represented by a dashed line, as illustrated in FIG. 2A. When the sample liquid S and the reference liquid R are fed to the test piece 100, air is discharged from the air vent hole 41. The sample liquid S fed from the liquid receiving port 40S of the test piece 100 is filled in the liquid retention hole 33A, and the reference liquid R fed from the liquid receiving port 40R is filled in the liquid retention hole 33D. Then, a short-circuit via a bridge 35 is generated between the sample liquid S filled in the liquid retention hole 33A and the reference liquid R filled in the liquid retention hole 33D.

The sample liquid S contains a potassium ion, which selectively permeates the ion-selective membrane 32A, a chloride ion, which selectively permeates the ion-selective membrane 32B, and a sodium ion, which selectively permeates the ion-selective membrane 32C, respectively. As a result, a potassium ion reaches the liquid receiving section 22A, a chloride ion reaches the liquid receiving section 22B, and a sodium ion reaches the liquid receiving section 22C, respectively. Similarly, the reference liquid R contains a potassium ion, which selectively permeates the ion-selective membrane 32D, a chloride ion, which selectively permeates the ion-selective membrane 32E, and a sodium ion, which selectively permeates the ion-selective membrane 32F, respectively. As a result, a potassium ion reaches the liquid receiving section 22D, a chloride ion reaches the liquid receiving section 22E, and a sodium ion reaches the liquid receiving section 22F, respectively. Here, a short-circuit is generated between the sample liquid S and the reference liquid R, whereby the respective potential differences due to the differences in ion concentration between the liquid receiving section 22A and the liquid receiving section 22D, between the liquid receiving section 22B and the liquid receiving section 22E, and between the liquid receiving section 22C and the liquid receiving section 22F are generated. Such potential differences generated can be measured by, for example, mounting the test piece 100 to an analyzer described below.

### <Analyzer>

Next, an analyzer will be described. The analyzer is provided with a test piece-mounting section that mounts a test piece according to one aspect of the present disclosure, and an analyzer body.

Hereinafter, an analyzer will be described with reference to drawings. Such an analyzer is not intended to be limited to one described in the drawings.

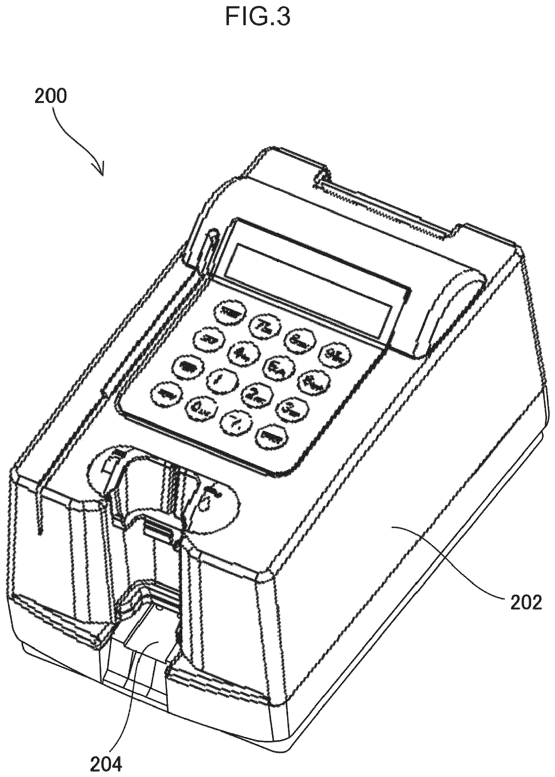

FIG. 3 is a perspective view representing an analyzer to which any of the test piece 100 illustrated in FIGs. 1A, 2A and 2B are to be mounted. An analyzer 200 is an apparatus that is used with mounting the test piece 100 and that computes an ion concentration based on a potential difference measured. The analyzer is provided with an analyzer body 202 and a test piece-mounting section 204 provided on the analyzer body 202. The analyzer body 202 contains a potential difference measurement circuit not illustrated, and probes P1 to P6 for contacting the terminal sections 21A to 21C and the terminal sections 21D to 21F of the test piece 100 respectively (see FIG. 2B). The probes P1 to P6 are formed as a pair of the probe P1 and the probe P2, a pair of the probe P3 and the probe P4, and a pair of the probe P5 and the probe P6, and each of the pairs are connected to the potential difference measurement circuit. The test piece-mounting section 204 is provided so as to be able to mount the test piece 100, and is formed so as to be slidable into the analyzer body 202.

The test piece 100 is mounted to the test piece-mounting section 204, and the sample liquid S is fed to the liquid receiving port 40S of the test piece 100 and the reference liquid R is fed to the liquid receiving port 40R of the test piece 100. After the sample liquid S and the reference liquid R are fed, the test piece 100 together with the test piece-mounting section 204 is slid into the analyzer body 202. The test piece 100 slid into the analyzer body 202 is brought into contact with the terminal sections 21A to 21F, and the probes P1 to P6 respectively corresponding to such terminal sections. The test piece 100 brought into contact with the probes P1 to P6 is controlled to be at a predetermined temperature (for example, 37°C) to start potential difference measurement.

A potential difference generated between the liquid receiving section 22A and the liquid receiving section 22D can be determined by, for example, bring the probe P2 into contact with the terminal section 21A and bring the probe P1 into contact with the terminal section 21D, and performing measurement in the potential difference measurement circuit connected to the probe P1 and the probe P2. Similarly, a potential difference generated between the liquid receiving section 22B and the liquid receiving section 22E can be measured by the potential difference measurement circuit connected to the probe P3 and the probe P4. A potential difference generated between the liquid receiving section 22C and the liquid receiving section 22F can be measured by the potential difference measurement circuit connected to the probe P5 and the probe P6.

Computing of a concentration of a specified ion is performed by, for example, running a computing program based on the measurement value of the potential difference. The computing program is created, for example, so that the ion concentration is computed by assigning the measurement value in a calibration curve created based on the Nernst equation.

### EXAMPLES

Next, features of the present disclosure will be described based on the following Examples, but the present disclosure is not intended to be limited to the following Examples.

### <Example 1>

First, respective liquid film-forming resin compositions for formation of a sodium ion-selective membrane (Na ion-selective membrane) and a potassium ion-selective membrane (K ion-selective membrane), to which no dielectric material was added, were prepared. The liquid film-forming resin compositions for formation of a Na ion-selective membrane and a K ion-selective membrane were prepared so that the content of each material in terms of the amount with respect to the solid contents of such ion-selective membranes was within the respective ranges disclosed above. Each material for use in the liquid film-forming resin compositions for formation of a Na ion-selective membrane and a K ion-selective membrane is as follows.

Next, rutile titanium dioxide particles (TiO₂: having a dielectric constant of 83) were added, as a dielectric material, to each of such liquid film-forming resin compositions so that the content with respect to a solid content of the ion-selective membrane was as shown in Table 1. Thus, the respective liquid film-forming resin compositions for formation of a sodium ion-selective membrane and a potassium ion-selective membrane, in which the dielectric material was dispersed, were prepared.

### (Na Ion-selective Membrane)

Electrolyte: silver chloride
Solvent: tetrahydrofuran
Binder resin: vinyl chloride/vinyl acetate copolymer, vinyl chloride/vinyl acetate/vinyl alcohol copolymer
Ionophore: bis(12-crown-4)
Anion eliminating agent: trioctylmethylammonium chloride, sodium tetrakis[3,5-bis(trifluoromethyl)phenyl]borate
Plasticizer: 2-nitrophenyl octyl ether

### (K Ion-selective Membrane)

Electrolyte: silver chloride
Solvent: tetrahydrofuran
Binder resin: vinyl chloride/vinyl acetate/vinyl alcohol copolymer
Ionophore: bis(15-crown-5)
Anion eliminating agent: trioctylmethylammonium chloride, potassium tetrakis(4-chlorophenyl)borate
Plasticizer: 2-nitrophenyl octyl ether

Next, a test piece was produced according to the following procedure so as to have the same structure as any of the structures illustrated in FIGs. 1A, 2A and 2B. First, a thermosetting silver paste was printed on a substrate by use of a mask (200-mesh, having a thickness of 20 µm) to prepare sample liquid electrodes and reference liquid electrodes. Next, the substrate on which printing was made was heated to cure a resin component in the paste. A lower layer resist was obtained as follows. An ultraviolet curing resist was printed on the substrate by use of a mask (300-mesh, having a thickness of 40 µm) and irradiated with ultraviolet light at an output of 6 kW for 5 seconds. The operation including the printing of the ultraviolet curing resist and the UV irradiation were repeated three times in total, thereby forming the lower layer resist so that the thickness was 50 µm. A diameter of each communication hole was 3.2 mm. An upper layer resist was formed according to the same procedure as that of the lower layer resist, except that a different mask was used, so that the thickness was 50 µm. After formation of the resists, silver chloride layers were formed on liquid receiving sections. After formation of the silver chloride layers, each of the liquid film-forming resin compositions for ion-selective membrane formation, in which the titanium dioxide particles were dispersed, was injected to each communication hole for coating the communication hole, and the resultant film was dried. Thus, a test piece was produced which was provided with an ion-selective electrode including a sodium ion-selective membrane in which the titanium dioxide particles were dispersed, and an ion-selective electrode including a potassium ion-selective membrane in which the titanium dioxide particles were dispersed. A chloride ion-selective membrane provided on the test piece was obtained by using a known liquid film-forming resin composition for chloride ion-selective membrane formation.

### <Comparative Example 1>

A test piece was produced in the same manner as in Example 1 except that the liquid film-forming resin composition was prepared and used without adding the dielectric material.

### <Examples 2 and 3 and Comparative Example 2>

In place of the liquid film-forming resin composition in which the titanium dioxide particles were dispersed, prepared in Example 1, a liquid film-forming resin composition in which hafnium oxide particles (having a dielectric constant of 25) were dispersed, produced by the same procedure as in Example 1, was prepared so that contents of components with respect to a solid content of the ion-selective membrane was as shown in Table 1 (Example 2). In place of the liquid film-forming resin composition in which the titanium dioxide particles were dispersed, prepared in Example 1, a liquid film-forming resin composition in which zirconium oxide particles (having a dielectric constant of 30) were dispersed, produced by the same procedure as in Example 1, was prepared so that contents of components with respect to a solid content of the ion-selective membrane was as shown in Table 1 (Example 3). Further, in place of the liquid film-forming resin composition in which the titanium dioxide particles were dispersed, prepared in Example 1, a liquid film-forming resin composition in which iron oxide particles (having a dielectric constant of 1.4) were dispersed, produced by the same procedure as in Example 1, was prepared so that contents of components with respect to a solid content of the ion-selective membrane was as shown in Table 1 (Comparative Example 2).

Each test piece was then produced in the same manner as in Example 1 except that each of the liquid film-forming resin compositions prepared in Example 2 and Example 3, and Comparative Example 2 was used.

**Table 1**

| | Dielectric material | | |
|---|---|---|---|
| | Kind | Na ion-selective membrane | K ion-selective membrane |
| | | % by mass | % by mass |
| Example 1 | Titanium dioxide (dielectric constant: 83) | 2 | 2 |
| | | 3 | 3 |
| | | 4 | 4 |
| | | 6 | 6 |
| | | 8 | 8 |
| | | 10 | 10 |
| Example 2 | Hafnium oxide (dielectric constant: 25) | 2 | 2 |
| | | 3 | 3 |
| | | 4 | 4 |
| | | 6 | 6 |
| | | 8 | 8 |
| Example 3 | Zirconium oxide (dielectric constant: 30) | 2 | 2 |
| | | 3 | 3 |
| | | 4 | 4 |
| | | 6 | 6 |
| | | 8 | - |
| Comparative Example 1 | Not added | 0 | 0 |
| Comparative Example 2 | Iron oxide (dielectric constant: 1.4) | 3 | 3 |

### (Measurement of Potential Difference)

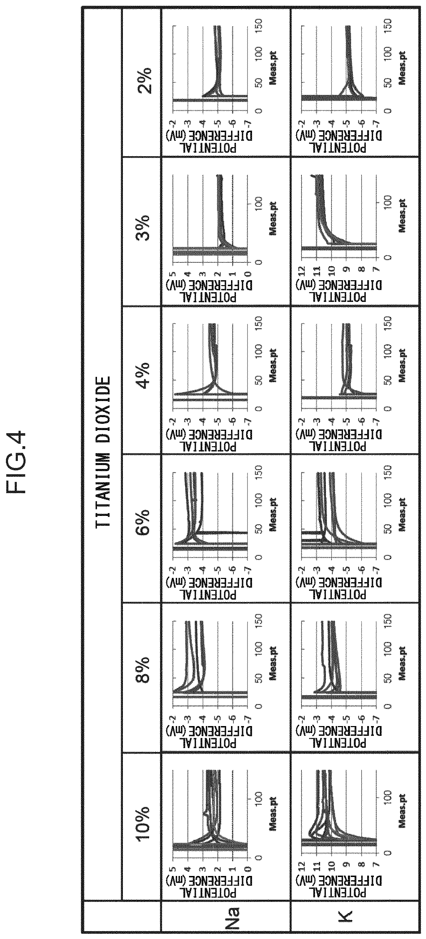

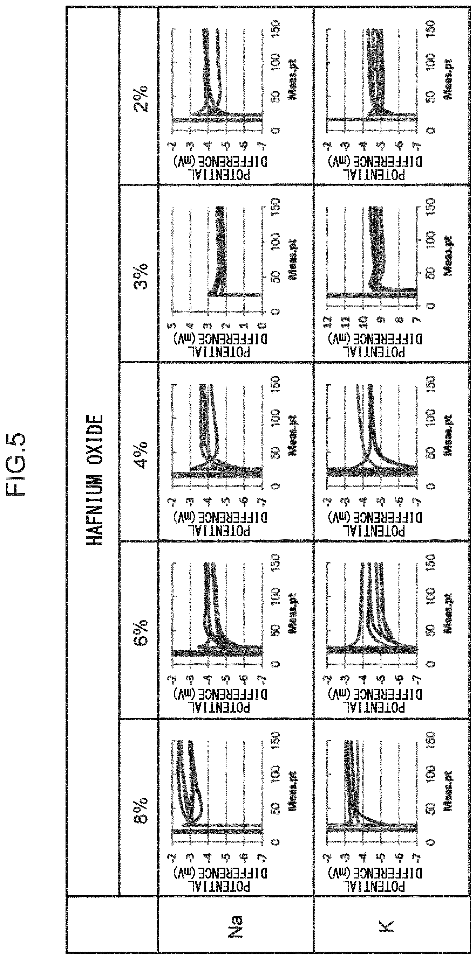

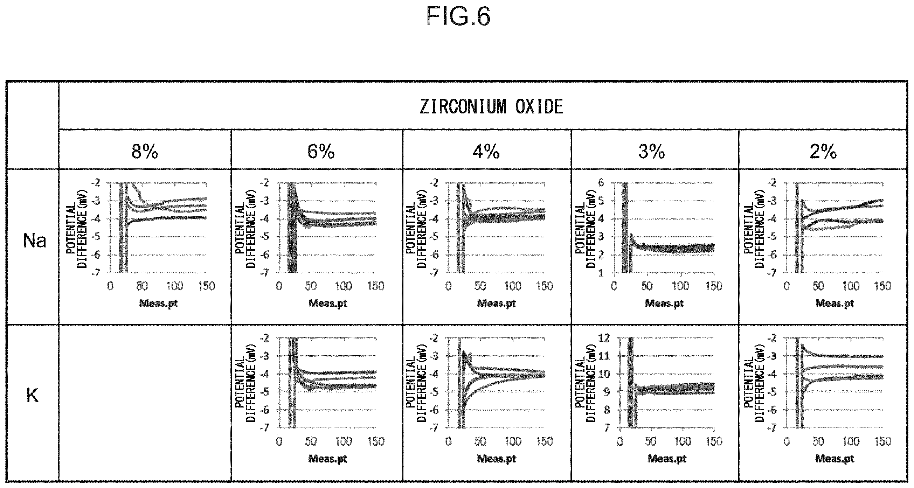

The potential difference was measured as follows. The test piece obtained in each Example was mounted to an analyzer (altered model of electrode-type electrolyte measurement device "SPOTCHEM EL" (trade name, manufactured by ARKRAY, Inc.)). A sample liquid used was a standard serum. A reference liquid included in a conventional test piece (E-PLATE, manufactured by ARKRAY, Inc.) was used, and the sample liquid and the reference liquid were fed to each feeding hole of the test piece, and then the potential difference was measured. The measurement results are shown in FIGs. 4 to 7. The results shown in FIGs. 4 to 7 indicate the potential differences individually measured with respect to test pieces made by use of the same material liquid, in the time course. The better the convergence in the time course is, the better the simultaneous repeatability is.

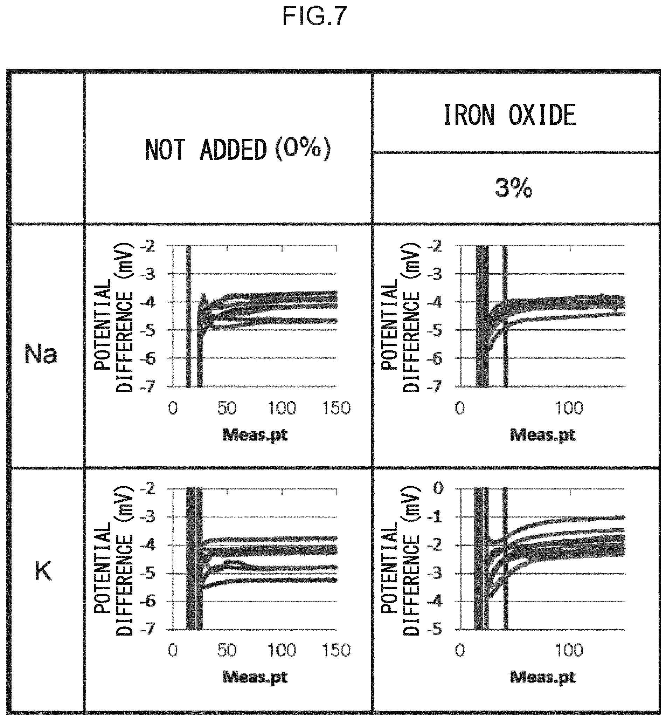

FIGs. 4 to 6 are each a graph representing the results obtained by analysis of the sample liquid by use of the test piece obtained in each Example. FIG. 7 is a graph representing the results obtained by analysis of the sample liquid by use of the test piece obtained in each Comparative Example. In FIGs. 4 to 7, the upper stage represents the measurement results of a Na ion and the lower stage represents the measurement results of a K ion. The sign "%" expressed with reference to the amount of the dielectric material added means "% by mass".

It was found as represented in FIG. 7 that the convergence in the time course in Comparative Example 2 was equal to or inferior relative to that in Comparative Example 1. In other words, it was found from Comparative Example 2 that no effect of enhancing simultaneous repeatability was exerted when an ion-selective membrane including a dielectric material having a dielectric constant of less than 10 is used.

In contrast, it was found from the results represented in FIGs. 4 to 6 that the convergence in the time course in each Example was favorable. In other words, it was found that simultaneous repeatability was enhanced by use of a dielectric material having a dielectric constant of 10 or more.

It was thus found from these results that an ion-selective electrode including an ion-selective membrane including a dielectric material having a dielectric constant of 10 or more exhibits excellent simultaneous repeatability. In particular, it was found from the results in Examples 1 to 3 that the dielectric constant of the dielectric material was preferably 25 or more, and was more preferably 50 or more because Example 1 imparted the best simultaneous repeatability.

It will be obvious to those having skill in the art that many changes may be made in the above-described details of the preferred embodiments of the present invention. It is intended that the scope of the invention be defined by the following claims and their equivalents.

## Claims

1. An ion-selective electrode comprising:
a pair of internal electrodes; and
an ion-selective membrane provided at respective positions corresponding to the internal electrodes, the ion-selective membrane comprising a binder resin, an ionophore, and a dielectric material having a dielectric constant of 10 or more.

2. The ion-selective electrode according to claim 1, wherein the dielectric material is in a form of a solid.

3. The ion-selective electrode according to claim 1 or 2, wherein the dielectric material comprises at least one selected from the group consisting of a carbon material and a metal oxide.

4. The ion-selective electrode according to any one of claims 1 to 3, wherein the dielectric material is in a form of particles.

5. The ion-selective electrode according to any one of claims 1 to 4, wherein the dielectric material comprises at least one selected from the group consisting of barium titanate, titanium oxide, titanium dioxide, hafnium oxide, and zirconium oxide.

6. The ion-selective electrode according to any one of claims 1 to 5, wherein a content of the dielectric material in the ion-selective membrane is from 2% by mass to 10% by mass with respect to a solid content of the ion-selective membrane.

7. The ion-selective electrode according to any one of claims 1 to 6, wherein a content of the dielectric material in the ion-selective membrane is from 2% by mass to 8% by mass with respect to a solid content of the ion-selective membrane.

8. The ion-selective electrode according to any one of claims 1 to 7, wherein the dielectric material comprises titanium dioxide, and a content of the dielectric material in the ion-selective membrane is from 2% by mass to 8% by mass with respect to a solid content of the ion-selective membrane.

9. The ion-selective electrode according to any one of claims 1 to 8, wherein the dielectric material is substantially uniformly dispersed throughout the ion-selective membrane.

10. The ion-selective electrode according to claim 9, wherein molecules of the binder resin form a three-dimensional network structure, and the dielectric material is physically fixed inside the three-dimensional network structure.

11. The ion-selective electrode according to any one of claims 1 to 10, wherein the ion-selective membrane is a cation-selective membrane.

12. The ion-selective electrode according to claim 11, wherein the cation-selective membrane is a sodium ion-selective membrane or a potassium ion-selective membrane.

13. The ion-selective electrode according to any one of claims 1 to 12, wherein the ion-selective membrane is directly disposed on the internal electrodes.

14. A test piece comprising: the ion-selective electrode according to any one of claims 1 to 13; and a liquid receiving section.
